# EUROPEAN PATENT SPECIFICATION

(11) **EP 4 617 176 B1**
(45) Date of publication and mention of the grant of the patent: **18.11.2026**
(21) Application number: 25162075.3
(22) Date of filing: 06.03.2025
(51) Int. Cl.: B64F 5/10, B64C 3/18, B64C 3/26, F16B 11/00

(54) **A JOINT ASSEMBLY IN AN AIRCRAFT STRUCTURE**
VERBINDUNGSANORDNUNG IN EINER FLUGZEUGSTRUKTUR
ENSEMBLE JOINT DANS UNE STRUCTURE D'AÉRONEF

(30) Priority: 11.03.2024 GB 202403462
(43) Date of publication of application: 17.09.2025
(73) Proprietor: Airbus Operations Limited, Bristol BS34 7PA (GB)
(72) Inventor: CLAYTON, Richard, Bristol, BS34 7PA (GB)
(74) Representative: Abel & Imray LLP

(56) References cited:
- EP-B1- 1 963 186
- US-A1- 2012 276 362
- US-A1- 2019 003 504
- US-B2- 8 479 394

## Description

### BACKGROUND OF THE INVENTION

The present disclosure relates to a joint assembly in an aircraft structure and to methods of joining aircraft components.

There are a number of different ways in which aircraft components can be joined together. In some arrangements, the components are mechanically held together, for example using fasteners. In the context of an aircraft wing, the wing skin may be attached to the rib feet of an aircraft rib, and this may be achieved by mechanically holding the wing skin to the rib feet using fasteners inserted through holes in the wing skin and in the rib feet. In such arrangements, each fastener is typically placed under pre-load to ensure a robust joint is achieved. It is important to maintain the correct wing skin profile, so where there are gaps between the rib feet and the wing skin (for example due to tolerances between the two components) it may be necessary to provide a shim.

US8479394 (Airbus Operations Limited) discloses an arrangement in which the wing skin and the rib feet are measured prior to assembly, and a shim of varying thickness is manufactured to fit the gap between the two structures. During assembly of the wing, a layer of sealant is applied to the outer face of each shim and the wing skin is brought into contact with the sealant/shim. Fasters are then passed through the wing skin, the shim and the rib feet, to mechanically join the wing skin to the rib.

US11325691 (The Boeing Company) also discloses a joint between a wing skin and a rib foot. A plurality of faying surfaces are provided on the rib foot. This reduces the overall contact area between the rib foot and the wing skin and reduces the need for shimming between the surfaces. US11325691 aims to remove the need for shimming altogether, but where a gap between the faying surface and the wing skin is still present, that gap is detected and measured, and a solid shim is then positioned within the gap.

US 2019/003504 A1 (Airbus Operations Limited) discloses a method of producing a sealed structural joint between two components. The method comprises applying sealant and a liquid shim and inserting an intermediate layer therebetween. The intermediate layer comprises raised structures to allow the sealant to extend across the joint to form a continuous seal. The joint is then closed and the liquid shim and sealant cured, solidifying the shim.

Both of the above-mentioned disclosures seek to improve the efficiency of joining the wing skin to the rib foot. It is desirable to yet further improve this process. Alternatively or additionally it is desirable to provide an improved joint assembly in an aircraft structure.

### SUMMARY OF THE INVENTION

According to a first aspect of the disclosure, there is provided an aircraft according to claim 2.

The aircraft comprises a joint assembly. The joint assembly comprises:
a first aircraft component having a plurality of holes therein; a second aircraft component having a plurality of holes therein; and a plurality of fasteners. Each fastener extends through a respective hole in the first aircraft component and a respective hole in the second aircraft component, and the plurality of fasteners are arranged such that the fasteners mechanically hold the first and second aircraft components together. The first aircraft component comprises a plurality of faying surfaces arranged at an interface with the second aircraft component, each faying surface being raised above a non-faying surface of the first aircraft component, and each faying surface surrounding a respective hole in the first aircraft component. The joint assembly further comprises a layer of material sandwiched directly between the faying surfaces and the second aircraft component, the layer of material having adhesive properties such that it structurally bonds the first and second aircraft components together. The layer of material also has structural properties to function as a shim.

Providing a faying surface on the first aircraft component has been found to be especially beneficial in conjunction with the layer of material acting as both an adhesive and a shim. In particular, the provision of a faying surface may enable the joint to be formed whilst using only a relatively small amount of material in the layer. The arrangement may also facilitate a relatively simple, visual, indication that the layer of material has been correctly applied between the faying surface and the second component because the operator may be able to see most of, or all of, the edges of the faying surface.

Materials having both adhesive properties and structural properties to function as a shim, are known. For example, US2019/0359815 describes a curable material for the simultaneous filling of tolerances and for sealing of components to be bonded in aircraft construction. The material in the layer of material in aspects of the present invention, may be the material disclosed in US2019/0359815. The material in the layer of material has been cured, the material having been derived from a curable pre-cursor. The curable pre-cursor (i.e. the material before it has been cured) may be a liquid shim. The material is configured to fill a volume arising due to tolerances between the faying surfaces and the second aircraft component, and to subsequently cure to form the solid shim. References herein to 'adhesive material' or alike will be understood to equally refer to the same material having the structural shimming properties once solidified. This material is also referred to herein as a 'dual-function' material.

The layer of material has structural properties to function as a shim. For example, the layer of material may have a modulus of elasticity suitable for acting as a shim. The layer of material may be drillable. The layer of material may have a gap-filling capacity for filing gaps of 3mm or less, and preferably for filing gaps of between 0.2mm and 2.5mm.

It will be appreciated that the reference to a 'layer' of material does not necessarily imply the layer is of uniform thickness. In fact, the layer is typically of varying thickness, this varying thickness arising from the tolerance between the faying surfaces and the second component. The layer of material is between each faying surface and the second component, and each of these layers need not necessarily adjoin one another.

The structural bond between the first and second components, created by the adhesive properties of the layer of material, is sufficient to contribute to the strength of the joint assembly. In this context, the skilled person will appreciate that the resulting joint assembly (having adhesive and fasteners) may be considered a hybrid joint. The adhesive properties of the material are preferably sufficient to ensure the material acts as a seal (for example to prevent egress of moisture).

Each faying surface is substantially circular. The circular surface is centred on the hole that the faying surface surrounds. Such an arrangement has been found to be especially beneficial because the faying surface may then substantially match the shape formed by the layer of material if that material is injected onto the faying surface via the hole. As the material will typically flow radially outward, embodiments of the invention recognise that the material can be efficiently applied to a correspondingly circular faying surface. The faying surface may include a chamfer, for example at its outer edges. Providing a chamfer has been found to be beneficial in facilitating a high peel strength between the faying surface and the second aircraft component.

The hole has a first diameter and the faying surface has a second diameter. The magnitude of the second diameter being between 2 and 4 times the first diameter. The magnitude of the second diameter may be around 3 times the magnitude of the first diameter. Such an arrangement has been found to be especially efficient.

The layer of material preferably only contacts the first component on the faying surface of the first aircraft component. The layer of material does not contact the non-faying surface of the first aircraft component. Such an arrangement allows the process to be relatively efficient in terms of time and material. The arrangement may allow the operator to readily detect (for example via a visual indication) that the material has been applied to the faying surface. The arrangement may also avoid, or minimise, the need to clean up excess spew of the material.

The faying surface is raised above the non-faying surface. The faying surface may be raised by a uniform magnitude above the non-faying surface. For example the faying surface may be raised by at least 1mm, preferably at least 2mm and preferably between 3mm and 4mm above the non-faying surface. The faying surface being raised by 3-4mm from the non-faying surface has been found to be especially beneficial because it tends to avoid water becoming trapped between the two surfaces.

In principle the joint assembly is suitable for use between a number of different aircraft components. Embodiments of the disclosure have been found to be especially beneficial in the context of the rib/wing skin joint. Thus, in preferred embodiments, the first aircraft component may be a rib. The rib may comprise a plurality of rib feet, the plurality of holes being located in the rib feet of the rib. The second component may be a wing skin.

It will be appreciated that reference herein to a component does not imply a unitary structure. For example the component may itself be formed from a plurality of subcomponents and may be pre-assembled therefrom.

According to another aspect of the disclosure, there is provided a method of joining a first aircraft component to a second aircraft component according to claim 1.

The method comprises the steps of: bringing the first aircraft component and the second aircraft component into proximity to one another; applying an adhesive material and arranging the first and second components such that the adhesive material is located on a plurality of faying surfaces of the first aircraft component and is sandwiched directly between the faying surfaces and second aircraft component, wherein the adhesive material is also a curable pre-cursor material, and the curable pre-cursor material is applied such that it fills a volume arising due to tolerances between the faying surfaces and the second aircraft component, and wherein the method comprises the step of curing the curable pre-cursor material such that it forms a solid shim in the volume; drilling a plurality of holes in the first and second aircraft components, each hole comprising a pair of aligned holes in the first and the second components; and attaching a plurality of fasteners, each fastener extending through a respective pair of aligned holes, the fasteners being arranged to mechanically hold the first and second aircraft components together, such that the components are simultaneously mechanically held together by the fasteners and adhesively bonded together by the adhesive material.

In some examples not falling within the scope of the claim 1, some of the steps may be undertaken in a different order to those listed above. For example, the adhesive material may be applied to the first component prior to the step of bringing the first and second components into proximity. The first and second components may be brought into proximity after the adhesive material has been applied, and in doing so the material may be sandwiched directly between the faying surfaces and the second component. Such a method may be used when, for example, the adhesive material is applied using a 'butter and paste' method.

More preferably, the steps of the above-mentioned method are conducted in the order recited. The second aircraft component comprises a plurality of pilot holes. The pilot holes may be holes through which the plurality of holes (for receiving the fasteners) are subsequently drilled. The step of applying the adhesive material comprises the step of injecting the adhesive material through the pilot holes in the first or second aircraft components and onto the faying surfaces. Such an arrangement has been found to be especially beneficial because the adhesive material typically spreads radially and therefore efficiently covers the faying surface.

It will of course be appreciated that features described in relation to one aspect of the present disclosure may be incorporated into other aspects of the present disclosure. For example, the method of the invention may incorporate any of the features described with reference to the apparatus of the invention and *vice versa,* as long as the resulting embodiment falls within the scope of the claims.

### DESCRIPTION OF THE DRAWINGS

Embodiments of the present invention will now be described by way of example only, with reference to the accompanying schematic drawings of which:
Figure 1 shows a side view of a joint assembly of a first embodiment of the invention, the joint assembly being formed by a rib foot and a wing skin of an aircraft;
Figure 2 shows a plan view of the underside of the rib foot in Figure 1; and
Figure 3 is a flow diagram illustrating a method of joining two aircraft structures, to form the joint assembly of Figures 1 and 2.

### DETAILED DESCRIPTION

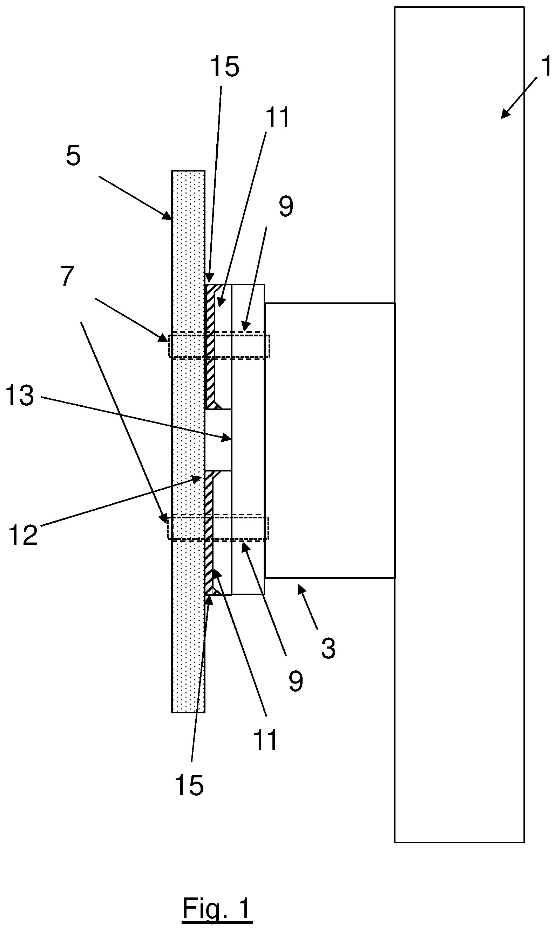

According to a first embodiment of the invention, there is provided a joint assembly as shown in Figure 1. The joint assembly comprises a rib 1, the rib 1 comprising a plurality of rib feet 3. For the sake of clarity, only one rib foot 3 is shown in Figure 1, but it will be appreciated that the rib feet 3 extend around the upper and lower surfaces of the rib 1 in a conventional manner, and are arranged to interface with the surrounding wing skin 5 to form a wing box structure.

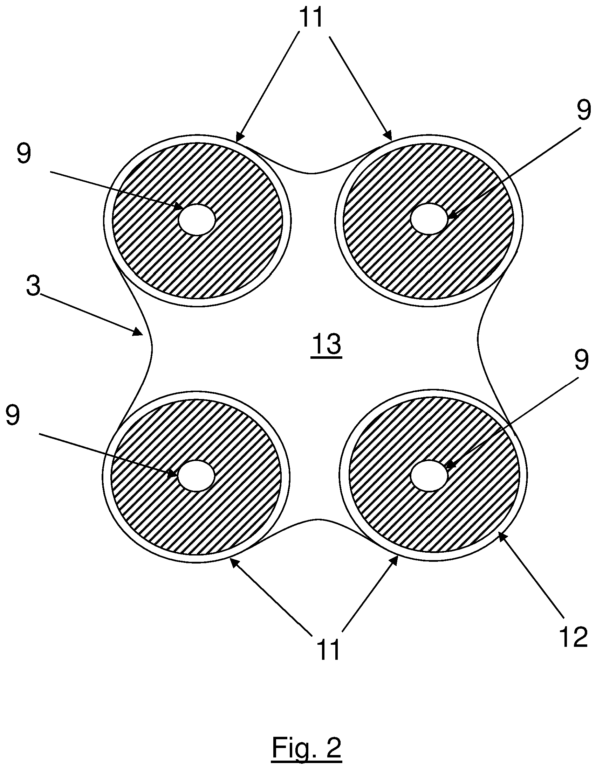

The joint assembly also comprises a second component in the form of the wing skin 5. The wing skin 5 is mechanically held to the rib foot 3 via a series of fasteners 7 which extend through respective holes 9 in the wing skin 5 and the rib foot 3 respectively (the holes 9 and the fasteners 7 are shown in phantom in Figure 1 and just the holes 9 are shown in Figure 2).

In the embodiment of the invention illustrated in Figures 1 and 2, each rib foot 3 comprises four spaced-apart faying surfaces 11. The faying surfaces 11 are raised approximately 3-4mm above the underlying non-faying surface 13 of the rib foot 3. Each faying surface 11 is substantially circular in planform and the circle is centred on the respective hole 9 through which the fastener 7 extends. The faying surfaces 11 are substantially planar but also include a small chamfer 12 around their perimeter. The above-described arrangement has been found to be especially beneficial when used in conjunction with a combined adhesive-shimming material, as will now be described below:

Referring to Figure 1, the joint assembly comprises a layer 15 of material sandwiched directly between the faying surfaces 11 and the inner surface of the wing skin 5. This layer of material 15 has adhesive properties such that it structurally bonds and seals the rib foot 3 and the wing skin 5 together. The joint assembly of the first embodiment is thus a hybrid joint and the components are held together by both the adhesive bond created by the layer of adhesive material 15 , and the mechanical coupling created by the fasteners 7.

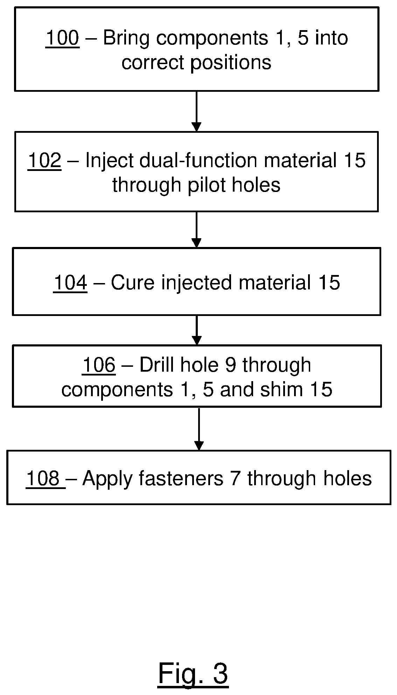

In the first embodiment, the adhesive material is a dual function adhesive-shimming material. The material 15 is applied as a curable pre-cursor (described in more detail below with reference to Figure 3). In this viscous form it is able to flow to fill any volume arising due to differences in tolerance between the wing skin 5 and the rib foot 3 (or more specifically between the inner surface of the wing skin 5 and the faying surfaces 11 of the rib foot 3). The material 15, when subsequently cured, then solidifies to form a shim between the wing skin 5 and rib foot 3. A material having these properties is described in, for example, US2019/0359815.

Providing the circular faying surfaces 11 on the rib foot 3 has been found to be especially beneficial in conjunction with this layer of material 15 that acts as both an adhesive and a shim. In particular, the provision of the faying surfaces 11 enables the joint to be formed whilst using only a relatively small amount of material 15 in the layer. The protruding faying surfaces 11, and the volume of adhesive material 15 applied, are such that the material does not contact the non-faying surface 13. The arrangement may therefore also facilitate a relatively simple, visual, indication that the layer of material 15 has been correctly applied between the faying surfaces 11 and the wing skin 5 because the operator may be able to see most of, or all of, the edges of each faying surface 11 and will be able to visually check that this surface has been sufficiently covered (for example by checking the material 15 extends to the edges of the faying surface 11).

In the first embodiment of the invention, the faying surfaces 11 are circular and are approximately 3 times the diameter of the holes 9 through which the fastener 7 is received. This ratio of fastener hole diameter 9 to faying surface 11 diameter has been found to be especially beneficial. The circular nature of the surface is also beneficial because when the adhesive material 15 is applied (described with reference to Figure 3) it tends to spread radially from the injection point and therefore uniformly across the faying surface 11.

Figure 3 is a flow diagram illustrating a method of joining two aircraft structures, to form the joint assembly of Figures 1 and 2, and reference will now be made to that method.

The first step 100 of forming the joint assembly is to bring to the rib 1 and the wing skin 5 into proximity to one another. In a similar manner to known methods of wing assembly, each aircraft component is held in a jig and the components are carefully brought into the correct position for assembly.

In the first embodiment of the invention, the holes 7 are drilled once the wing skin 5 and rib feet 3 have been bonded by the layer of adhesive material 15. Accordingly, the fastener holes 7 are not initially present in the rib feet 3 or wing skin 5. Instead, the rib feet 3 initially only have pilot holes centred on where the fastener hole 7 will be subsequently drilled (see step 106 below). The first embodiment of the invention uses these pilot holes in a beneficial manner to ensure efficient and accurate application of the dual-function adhesive-shimming material 15. This takes place as the next step 102, in which the dual-function adhesive material 15 is injected through the pilot holes in the rib feet 3. Due to the close proximity of the wing skin 5, the adhesive material will fill the gap between the faying surface 11 and the wing skin 5 and will spread radially outward from the pilot hole and across the faying surface 11. The material 15 is injected through each pilot hole until the operator can visually see the material at the circumferential edges of the respective faying surface 11.

The adhesive material 15 injected through the pilot holes is a curable pre-cursor material, and flows in a manner to fill any volume arising due to tolerances between the faying surfaces 11 and the wing skin 5. In step 104, the injected material is cured, and the material 15 is of a type that forms a solid shim in the volume once cured.

Once the material has cured to form the solid shim, the next step 106 is conducted: Holes 9 are drilled through the wing skin 5, the rib foot 3, and the layer of shim material 15 sandwiched therebetween. The holes 9 are centred on the centre of each faying surface 11.

Upon completion of the drilling, a fastener 7 is applied through each hole 9 with pre-load (step 108), thereby mechanically holding the wing skin onto the rib foot.

The resulting joint assembly thus comprises a hybrid joint with both adhesive and mechanical forces contributing to the joint strength. Furthermore, the joint assembly includes a shim to ensure the correct shape of the wing skin on the rib feet.

Whilst the present invention has been described and illustrated with reference to a particular embodiment, it will be appreciated by those of ordinary skill in the art that the invention lends itself to many different variations not specifically illustrated herein.

By way of example, that does not fall within the scope of the claims, the adhesive material is not injected and is instead applied using a 'butter and paste' method. In this arrangement the material is applied before the wing skin is brought into position against the rib feet, and becomes subsequently sandwiched between the wing skin and rib feet, as the wing skin is brought into position against the rib feet.

By way of another example, the joint assembly having aspects of the present disclosure may be formed between other aircraft components, and not necessarily only the wing skin and rib feet.

By way of another example, the faying surfaces 11 need not necessarily include a chamfer 12. In such an embodiment, an external fillet for the layer of material may instead be provided. Such an arrangement does, however, tend to be more time consuming to assemble that arrangements with an internal chamfer on the faying surface.

Reference should be made to the claims for determining the true scope of the present invention. . It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A method of joining a first aircraft component (1) to a second aircraft component (5), wherein the method comprises the sequential steps of:
bringing the first aircraft component (1) and the second aircraft component (5) into proximity to one another;
applying an adhesive material (15) and arranging the first and second components (1, 5) such that the adhesive material (15) is located on a plurality of faying surfaces (11) of the first aircraft component (1) and is sandwiched directly between the faying surfaces (11) and second aircraft component (5),
wherein the adhesive material (15) is also a curable pre-cursor material, and the curable pre-cursor material is applied such that it fills a volume arising due to tolerances between the faying surfaces (11) and the second aircraft component (5), and wherein the method comprises the step (104) of curing the curable pre-cursor material such that it forms a solid shim in the volume;
drilling a plurality of holes (9) in the first and second aircraft components (1, 5), each hole (9) comprising a pair of aligned holes in the first and the second components (1, 5); and
attaching a plurality of fasteners (7), each fastener (7) extending through a respective pair of aligned holes (9), the fasteners (7) being arranged to mechanically hold the first and second aircraft components (1, 5) together,
such that the components (1, 5) are simultaneously mechanically held together by the fasteners (7) and adhesively bonded together by the adhesive material (15),
**characterised in that**
the second aircraft component (5) comprises a plurality of pilot holes, through which the plurality of holes (9) are subsequently drilled, and wherein the step (102) of applying the adhesive material (15) comprises the step (102) of injecting the adhesive material (15) through the pilot holes in the second aircraft component (5) and onto the faying surfaces (11),
wherein each faying surface (11) is raised above a non-faying surface (13) of the first aircraft component (1) and
wherein each faying surface (11) is substantially circular, and when the first aircraft component (1) and the second aircraft component (5) are brough into proximity to one another, each circular surface is centred on a respective pilot hole through which the adhesive material (15) is injected.

2. An aircraft comprising a joint assembly, the joint assembly comprising:
a first aircraft component (1) having a plurality of holes (9) therein;
a second aircraft component (5) having a plurality of holes (9) therein; and
a plurality of fasteners (7), each fastener (7) extending through a respective hole (9) in the first aircraft component (1) and a respective hole (9) in the second aircraft component (5), and the plurality of fasteners (7) being arranged such that the fasteners (7) mechanically hold the first and second aircraft components (1, 5) together;
and wherein the first aircraft component (1) comprises a plurality of faying surfaces (11) arranged at an interface with the second aircraft component (5), each faying surface (11) being raised above a non-faying surface (13) of the first aircraft component (1), each faying surface (11) surrounding a respective hole (9) in the first aircraft component (1), and each faying surface (11) being substantially circular, the circular surface being centred on the hole (9) that the faying surface (11) surrounds,
wherein the hole (9) has a first diameter and the faying surface (11) has a second diameter, the magnitude of the second diameter being between 2 and 4 times the magnitude of the first diameter,
and wherein the joint assembly further comprises a layer of material (15) sandwiched between the faying surfaces (11) and the second aircraft component (5), the layer of material (15) having adhesive properties such that it structurally bonds the first and second aircraft components (1, 5) together, and the layer of material (15) also having structural properties to function as a shim, wherein the material in the layer of material (15) has been cured, the material having been derived from a curable pre-cursor that is configured to fill a volume arising due to tolerances between the faying surfaces (11) and the second aircraft component (5), and to subsequently cure to form the solid shim, and wherein the layer of material (15) does not contact the non-faying surface (13) of the first aircraft component (1).

3. An aircraft according to claim 2, wherein the magnitude of the second diameter is 3 times the magnitude of the first diameter.

4. A method according to claim 1, or an aircraft according to claim 2 or claim 3, wherein the first aircraft component (1) is a rib (1) comprising a plurality of rib feet (11), the plurality of holes (9) being located in the rib feet (11) of the rib (1), and wherein the second aircraft component (5) is a wing skin (5).

## Patentansprüche

1. Verfahren zum Verbinden einer ersten Flugzeugkomponente (1) mit einer zweiten Flugzeugkomponente (5),
wobei das Verfahren die folgenden aufeinanderfolgenden Schritte umfasst:
Bringen der ersten Flugzeugkomponente (1) und der zweiten Flugzeugkomponente (5) zueinander;
Auftragen eines Klebematerials (15) und Anordnen der ersten und zweiten Komponente (1, 5), sodass sich das Klebematerial (15) auf mehreren Stoßflächen (11) der ersten Flugzeugkomponente (1) befindet und direkt zwischen den Stoßflächen (11) und der zweiten Flugzeugkomponente (5) angeordnet ist,
wobei das Klebematerial (15) außerdem ein aushärtbares Vorläufermaterial ist und das aushärtbare Vorläufermaterial derart aufgebracht wird, dass es ein Volumen füllt, das aufgrund von Toleranzen zwischen den Stoßflächen (11) und der zweiten Flugzeugkomponente (5) entsteht, und wobei das Verfahren den Schritt (104) des Aushärtens des aushärtbaren Vorläufermaterials umfasst, sodass es eine feste Zwischenlage in dem Volumen bildet;
Bohren mehrerer Löcher (9) in der ersten und zweiten Flugzeugkomponente (1, 5), wobei jedes Loch (9) ein Paar ausgerichtete Löcher in der ersten und zweiten Komponente (1, 5) umfasst; und
Anbringen mehrerer Befestigungselemente (7), wobei sich jedes Befestigungselement (7) durch ein jeweiliges Paar ausgerichtete Löcher (9) erstreckt, wobei die Befestigungselemente (7) dazu angeordnet sind, die erste und zweite Flugzeugkomponente (1, 5) mechanisch zusammenzuhalten,
sodass die Komponenten (1, 5) gleichzeitig durch die Befestigungselemente (7) mechanisch zusammengehalten und durch das Klebematerial (15) miteinander verklebt werden, **dadurch gekennzeichnet, dass**
die zweite Flugzeugkomponente (5) mehrere Führungslöcher umfasst, durch die die mehreren Löcher (9) anschließend gebohrt werden, und wobei der Schritt (102) des Auftragens des Klebematerials (15) den Schritt (102) des Einspritzens des Klebematerials (15) durch die Führungslöcher in der zweiten Flugzeugkomponente (5) und auf die Stoßflächen (11) umfasst,
wobei jede Stoßfläche (11) über eine Nicht-Stoßfläche (13) der ersten Flugzeugkomponente (1) erhöht ist und
wobei jede Stoßfläche (11) im Wesentlichen kreisförmig ist und, wenn die erste Flugzeugkomponente (1) und die zweite Flugzeugkomponente (5) zueinander gebracht werden, jede kreisförmige Fläche auf einem jeweiligen Führungsloch, durch welches das Klebematerial (15) eingespritzt wird, zentriert ist.

2. Flugzeug, eine Verbindungsanordnung umfassend, wobei die Verbindungsanordnung Folgendes umfasst:
eine erste Flugzeugkomponente (1) mit mehreren Löchern (9) darin;
eine zweite Flugzeugkomponente (5) mit mehreren Löchern (9) darin und
mehrere Befestigungselemente (7), wobei sich jedes Befestigungselement (7) durch ein jeweiliges Loch (9) in der ersten Flugzeugkomponente (1) und ein jeweiliges Loch (9) in der zweiten Flugzeugkomponente (5) erstreckt und die mehreren Befestigungselemente (7) derart angeordnet sind, dass die Befestigungselemente (7) die erste und zweite Flugzeugkomponente (1, 5) mechanisch zusammenhalten;
und wobei die erste Flugzeugkomponente (1) mehrere Stoßflächen (11) umfasst, die an einer Schnittstelle zur zweiten Flugzeugkomponente (5) angeordnet sind, wobei jede Stoßfläche (11) über eine Nicht-Stoßfläche (13) der ersten Flugzeugkomponente (1) angehoben ist, wobei jede Stoßfläche (11) ein jeweiliges Loch (9) in der ersten Flugzeugkomponente (1) umgibt und jede Stoßfläche (11) im Wesentlichen kreisförmig ist, wobei die kreisförmige Fläche auf dem Loch (9), das die Stoßfläche (11) umgibt, zentriert ist,
wobei das Loch (9) einen ersten Durchmesser aufweist und die Stoßfläche (11) einen zweiten Durchmesser aufweist, wobei die Größe des zweiten Durchmessers das 2- bis 4-Fache der Größe des ersten Durchmessers beträgt
und wobei die Verbindungsanordnung ferner eine Materialschicht (15) umfasst, die zwischen den Stoßflächen (11) und der zweiten Flugzeugkomponente (5) angeordnet ist, wobei die Materialschicht (15) Klebeeigenschaften aufweist, sodass sie die erste und zweite Flugzeugkomponente (1, 5) strukturell miteinander verbindet, und wobei die Materialschicht (15) außerdem strukturelle Eigenschaften aufweist, um als Zwischenlage zu fungieren, wobei das Material in der Materialschicht (15) ausgehärtet wurde, wobei das Material von einem aushärtbaren Vorläufer abgeleitet wurde, der dazu ausgelegt ist, ein Volumen zu füllen, das aufgrund von Toleranzen zwischen den Stoßflächen (11) und der zweiten Flugzeugkomponente (5) entsteht, und anschließend auszuhärten, um die feste Zwischenlage zu bilden, und
wobei die Materialschicht (15) die Nicht-Stoßfläche (13) der ersten Flugzeugkomponente (1) nicht berührt.

3. Flugzeug nach Anspruch 2, wobei die Größe des zweiten Durchmessers das 3-Fache der Größe des ersten Durchmessers beträgt.

4. Verfahren nach Anspruch 1 oder Flugzeug nach Anspruch 2 oder Anspruch 3,
wobei die erste Flugzeugkomponente (1) eine Rippe (1) ist, die mehrere Rippenfüße (11) umfasst, wobei sich die mehreren Löcher (9) in den Rippenfüßen (11) der Rippe (1) befinden und wobei die zweite Flugzeugkomponente (5) eine Flügelhaut (5) ist.

## Revendications

1. Procédé de raccordement d'un premier composant d'aéronef (1) à un second composant d'aéronef (5),
le procédé comprenant les étapes successives suivantes :
amener le premier composant d'aéronef (1) et le second composant d'aéronef (5) à proximité l'un de l'autre ;
appliquer un matériau adhésif (15) et disposer les premier et second composants (1, 5) de telle sorte que le matériau adhésif (15) soit situé sur une pluralité de surfaces de contact (11) du premier composant d'aéronef (1) et soit pris en sandwich directement entre les surfaces de contact (11) et le second composant d'aéronef (5),
le matériau adhésif (15) étant également un matériau précurseur durcissable, et le matériau précurseur durcissable étant appliqué de manière à remplir un volume existant en raison de tolérances entre les surfaces de contact (11) et le second composant d'aéronef (5), et le procédé comprenant l'étape (104) de durcissement du matériau précurseur durcissable de sorte qu'il forme une cale solide dans le volume ;
percer une pluralité de trous (9) dans les premier et second composants d'aéronef (1, 5), chaque trou (9) comprenant une paire de trous alignés dans les premier et second composants (1, 5) ; et
fixer une pluralité d'attaches (7), chaque attache (7) s'étendant à travers une paire respective de trous alignés (9), les attaches (7) étant conçues pour maintenir mécaniquement les premier et second composants (1, 5) d'aéronef unis,
de telle sorte que les composants (1, 5) soient simultanément maintenus mécaniquement unis au moyen des attaches (7) et assemblés par adhérence au moyen du matériau adhésif (15),
**caractérisé en ce que**
le second composant d'aéronef (5) comprend une pluralité de trous pilotes à travers lesquels sont ensuite percés la pluralité de trous (9), et l'étape (102) d'application du matériau adhésif (15) comprenant l'étape (102) d'injection du matériau adhésif (15) à travers les trous pilotes du second composant d'aéronef (5) et sur les surfaces de contact (11),
chaque surface de contact (11) étant surélevée au-dessus d'une surface sans contact (13) du premier composant d'aéronef (1) et
chaque surface de contact (11) étant sensiblement circulaire et, lorsque le premier composant d'aéronef (1) et le second composant d'aéronef (5) sont amenés à proximité l'un de l'autre, chaque surface circulaire étant centrée sur un trou pilote respectif à travers lequel le matériau adhésif (15) est injecté.

2. Aéronef comprenant un ensemble constituant un raccord, l'ensemble constituant un raccord comportant :
un premier composant d'aéronef (1) dans lequel sont formés une pluralité de trous (9) ;
un second composant d'aéronef (5) dans lequel sont formés une pluralité de trous (9) ; et
une pluralité d'attaches (7), chaque attache (7) s'étendant à travers un trou respectif (9) dans le premier composant d'aéronef (1) et un trou respectif (9) dans le second composant d'aéronef (5), et la pluralité d'attaches (7) étant conçue de telle sorte que les attaches (7) maintiennent mécaniquement les premier et second composants d'aéronef (1, 5) unis ;
et dans lequel le premier composant d'aéronef (1) comprend une pluralité de surfaces de contact (11) disposées à une interface avec le second composant d'aéronef (5), chaque surface de contact (11) étant surélevée au-dessus d'une surface sans contact (13) du premier composant d'aéronef (1), chaque surface de contact (11) entourant un trou respectif (9) dans le premier composant d'aéronef (1), et chaque surface de contact (11) étant sensiblement circulaire, la surface circulaire étant centrée sur le trou (9) que la surface de contact (11) entoure,
dans lequel le trou (9) a un premier diamètre et la surface de contact (11) a un second diamètre, la grandeur du second diamètre étant comprise entre 2 et 4 fois la grandeur du premier diamètre,
et dans lequel l'ensemble constituant un raccord comporte, en outre, une couche de matériau (15) prise en sandwich entre les surfaces de contact (11) et le second composant d'aéronef (5), la couche de matériau (15) ayant des propriétés adhésives telles qu'elle assemble structurellement les premier et second composants d'aéronef (1, 5), et la couche de matériau (15) ayant également des propriétés structurelles pour fonctionner comme une cale, dans lequel le matériau dans la couche de matériau (15) a été durci, le matériau ayant été dérivé d'un précurseur durcissable conçu pour remplir un volume existant en raison de tolérances entre les surfaces de contact (11) et le second composant d'aéronef (5), et pour ensuite durcir afin de former la cale solide, et
dans lequel la couche de matériau (15) ne vient pas en contact avec la surface sans contact (13) du premier composant d'aéronef (1).

3. Aéronef selon la revendication 2, dans lequel la grandeur du second diamètre est 3 fois la grandeur du premier diamètre.

4. Procédé selon la revendication 1, ou aéronef selon la revendication 2 ou la revendication 3,
dans lequel le premier composant d'aéronef (1) est une nervure (1) comprenant une pluralité de pieds de nervure (11), la pluralité de trous (9) étant situés dans les pieds de nervure (11) de la nervure (1), et dans lequel le second composant d'aéronef (5) est une peau d'aile (5).
